# EUROPÄISCHE PATENTANMELDUNG

(11) **EP 1 150 159 A1**
(43) Veröffentlichungstag der Anmeldung: **31.10.2001**
(21) Anmeldenummer: 00109030.7
(22) Anmeldetag: 27.04.2000
(51) Int. Cl.: G03B 21/00, H04N 9/31, H04N 5/74

(54) **Verfahren, System und Projektionseinrichtung zur visuellen Darstellung einer digitalen Bildinformation auf einer Projektionsfläche und Lichtmessgerät für das System**

(71) Anmelder: Gretag-MacBeth AG, 8105 Regensdorf (CH)
(72) Erfinder: Ehbets,Peter, 8046 Zürich (CH); Braun,Thorsten, 48432 Rheine (DE); Lamy,Francis, Mamaronck, NY 10543 (US)
(74) Vertreter: Schwabe - Sandmair - Marx

(57) **Zusammenfassung**

Zur visuellen Darstellung einer in elektronischer Form in einem Rechner vorliegenden Bildinformation auf einer Projektionsfläche werden die im Rechner (R) gespeicherten, die Bildinformation in einem Farbraum repräsentierenden Bilddaten in Form eines Videodatenstroms einer elektronischen Projektionseinrichtung (B) zugeführt. Diese erzeugt daraus entsprechende optische Signale erzeugt und projiziert diese auf die Projektionsfläche (L). Die Projektionseinrichtung (B) wird in ein Color Management System mit einbezogen. Dazu wird ein die Transfercharakteristik mindestens der Projektionseinrichtung (B) selbst beschreibendes Ausgabeprofil erzeugt. Anhand dieses Ausgabeprofils werden dann die Bilddaten nach den Prinzipien des Color Managements in den gerätespezifischen Farbraum der Projektionseinrichtung transformiert. Zur Profilerstellung wird in Verbindung mit einer Profilerstellungssoftware ein Lichtmessgerät (M) verwendet, welches entweder das von der Projektionseinrichtung emittierte oder vorzugsweise das von der Projektsfläche remittierte Licht erfasst und die dabei erzeugten Messdaten in die Profilerstellungssoftware einspeist.

## Beschreibung

Die Erfindung betrifft ein Verfahren, ein System und eine Projektionseinrichtung zur visuellen Darstellung einer in elektronischer Form in einem Rechner vorliegenden Bildinformation auf einer Projektionsfläche gemäss dem Oberbegriff der unabhängigen Ansprüche 1 bzw. 9 bzw. 29 sowie ein für das Verfahren bzw. das System geeignetes Lichtmessgerät gemäss dem Oberbegriff des unabhängigen Anspruchs 19.

Konkreter befasst sich die vorliegende Erfindung mit der Verbesserung der Farbwiedergabequalität von Daten- und Videoprojektoren. Die englische Bezeichnung für Daten- oder Videoprojektoren ist Beamer. Sie soll im folgenden als Abkürzung gebraucht werden.

Ein Beamer projiziert ein Monitorbild auf eine geeignete Projektionsfläche, beispielsweise eine Leinwand. Der Beamer erhält als Eingangssignal ein Videosignal von der Videokarte eines Personal oder Laptop Computers. Das Videosignal wird im Beamer erforderlichenfalls digitalisiert und in die Farbkomponenten R, G, und B zerlegt. Mit den Farbsignalen R, G, und B wird ein optischer Modulator angesteuert. Dieser wird mit einer Beleuchtungsoptik ausgelesen und mit einer Abbildungsoptik auf die Leinwand projiziert. Moderne Beamertechnologien benutzen als optische Modulatoren entweder TFT-LCDs (Thin Film Transistor - Liquid Crystal Displays), Polysilizium-LCDs oder eine Matrix aus bewegbaren Mikrospiegeln, z. B. der DMD-Chip (Digital Micro Mirror Device) von Texas Instruments.

Das optische System von Beamern ist normalerweise für einen maximalen Wirkungsgrad der Beleuchtungs- und Projektionsoptik optimiert. Das Ziel ist es dabei, ein möglichst lichtstarkes Bild auf der Leinwand zu erzeugen, um in nicht abgedunkelten Räumen einen möglichst hohen sichtbaren Kontrast zu erreichen.

Die Farbwiedergabequalität von handelsüblichen Beamern ist hingegen schlecht. Gegenüber einem Monitorbild treten deutlich sichtbare Farbtonverschiebungen auf. Ausserdem erscheinen die Farben wegen der Auslegung auf maximale Lichtstärke als zu wenig gesättigt. Dies beschränkt den Anwendungsbereich von herkömmlichen Beamern. So ist zum Beispiel die Präsentation von farbkritischen Dokumenten zur Zeit nur schlecht mit dem Beamer möglich.

Eine Hauptaufgabe der vorliegenden Erfindung ist deshalb die Verbesserung der Farbwiedergabequalität beim Einsatz von Beamern. Dabei soll mit einem Beamer eine möglichst farbtreue Reproduktion vom Bildschirm des Computers, auf dem die Dokumente oder Präsentationen entworfen und zusammengestellt werden, auf der Leinwand oder sonstigen Projektionsfläche erreicht werden.

Das erfindungsgemässe Verfahren, das erfindungsgemässe System und die erfindungsgemässe Projektionseinrichtung, die diese Aufgabe lösen, sind in den unabhängigen Ansprüchen 1 bzw. 9 bzw. 29 beschrieben. Bevorzugte Ausgestaltungen und Weiterbildungen sind Gegenstand der jeweils abhängigen Ansprüche. Das für das erfindungsgemässe Verfahren speziell geeignete erfindungsgemässe Lichtmessgerät ist durch die Merkmale des unabhängigen Anspruchs 19 gekennzeichnet. Bevorzugte und vorteilhafte Ausgestaltungen des Lichtmessgeräts sind Gegenstand der abhängigen Ansprüche 20-28.

Gemäss dem allgemeinsten, grundlegenden Aspekt der Erfindung wird also die Steigerung der Farbwiedegabequalität erreicht, indem die Projektionseinrichtung (der Beamer) in ein Color Management System miteinbezogen wird.

Color Management (CM) und Color Management Systeme (CMS) sind an sich bekannt und werden in digitalen Farbreproduktionssprozessen allgemein eingesetzt. Eine umfassende und übersichtliche Darstellung der Hintergründe, Technologien und Anwendungen von Color Management Systemen findet sich in der von der Firma Logo GmbH, einer Gesellschaft der GretagMacbeth Gruppe, im August 1999 herausgegebenen Publikation "Postscriptum on Color Management, Philosophy and Technology of Color Management" der Autoren Stefan Brües, Liane May und Dietmar Fuchs. Eine weitere Abhandlung über Color Management findet sich beispielsweise im Kapitel 17 "Device-Independent Color Imaging" des Buchs "Color Appearance Models" von Mark D. Fairchild, erste Auflage, herausgegeben 1997 von Addison Wesley.

Ein CMS ermöglicht eine farbtreue Reproduktion einer Bildvorlage in einem digitalen Arbeitsablauf, der ein Eingabemedium (z. B. Scanner oder digitale Kamera) und mehrere Ausgabemedien (z. B. Monitor und Drucker) beinhalten kann. Mit dem Eingabemedium wird die Vorlage digitalisiert und die RGB-Werte jedes Bildpixels in einem Datenfile abgespeichert. Das RGB-Bild kann am Monitor dargestellt oder für eine Ausgabe auf einem Drucker in die Druckfarben CMYK (Cyan, Magenta, Yellow, Schwarz) umgerechnet werden. Die farbtreue Reproduktion wird durch den Einsatz einer Gerätekalibrierung und von Geräteprofilen erreicht.

Bei der Gerätekalibrierung werden die Grundeinstellungen des Geräts möglichst optimal für die gewünschte Reproduktion gewählt. Dies beinhaltet zum Beispiel beim Monitor die Einstellung des Kontrasts, der Helligkeit, des Weiss- und Schwarzpunktes sowie der Farbtemperatur entsprechend der gewünschten Beleuchtungsart. Die Kalibrierung kann in an sich bekannter Weise mit Hilfe von Farbmessgeräten optimal ausgeführt und vor allem reproduzierbar gemacht werden.

Ein Geräteprofil beschreibt den Farbraum eines Eingabe- oder Ausgabegeräts, indem es den gerätespezifischen Farbwerten (z. B. RGB oder CMYK) absolute Farbwerte (XYZ oder CIELab L*a*b*) gemäss den Spezifikation der CIE (Commission Internationale de l'Eclairage) oder andere nicht gerätespezifische Farbwerte (z.B. sRGB) zuordnet. Das Geräteprofil hängt stark von der Gerätekalibration ab. Um Color Management erfolgreich durchführen zu können, ist es deshalb Voraussetzung, dass sich die Kalibration aller beteiligten Ein- und Ausgabegeräte nicht verändert. Sie muss durch regelmässige Kontrolle und Nachjustierung in einem konstanten Zustand gehalten werden.

Für die farbtreue Bildreproduktion verbindet das CMS die Profile des Eingabe- und Ausgabemediums und erhält so eine Transfercharakteristik. Gleichzeitig führt das CMS eine Abbildung des Farbraums des Eingabegeräts auf den Farbraum des Ausgabegeräts durch. Diese Abbildung stellt sicher, dass alle Farben auf dem Ausgabemedium dargestellt werden können. Die Abbildungen, d. h. die Reskalierung der Farbräume, wird gemäss verschiedenen Reproduktionskriterien, den sogenannten Rendering Intents, durchgeführt. Dabei wird zwischen den Moden "Perceptual" (gleicher Farbeindruck im Bild), "Relativ Colorimetric", "Absolute Colorimetric" und "Saturation" unterschieden, welche im Dokument ICC-1:1998-09 des International Color Consortium definiert sind.

Bei der Profilerstellung muss der Farbraum der Ein- und Ausgabegeräte mit spezialisierten Farbmessgeräten oder mittels farbmetrisch kalibrierter Vorlagen, sogenannten Testcharts, vermessen werden. Für optimale Resultate sollte die verwendete Farbmesstechnik auf einer spektralen Messung (Spektralphotometrie) beruhen. Dies ermöglicht die Erkennung von Metamerie und Fluoreszenz sowie die richtige Bewertung verschiedener Beleuchtungsarten.

Zur Zeit bieten verschiedene Hersteller Farbmessgeräte und Softwareprodukte für Color Management Anwendungen an. Dabei werden auf der Eingabeseite Scanner und digitale Kameras und auf der Ausgabeseite CRT und LCD Monitore, digitale Drucksysteme (z. B. Laser, Inkjet) sowie Druckmaschinen unterstützt. Als Beispiel sei die Color Management Lösung der Firma GretagMacbeth erwähnt, welche ihr Spektralphotometer "Spectrolino" als gemeinsamen Farbmesskopf für die Ein- und Ausgabegeräte benutzt, Testcharts mit einer grossen Anzahl von Farbfeldern für die Profilierung von Druckern mit dem automatischen x-y Verschiebetisch "SpectroScan" vermisst und die Gerätekalibrierung und -profilierung mit dem Softwarepaket "ProfileMaker" durchführt.

Gemäss dem grundlegenden Hauptaspekt der vorliegenden Erfindung wird die Projektionseinrichtung, also der Beamer, in ein Color Management System mit einbezogen. Hauptziel ist es dabei, mittels eines Beamers eine farbtreue Reproduktion vom Bildschirm des Rechners, auf dem die Bildinformationen (z.B. Dokumente oder Präsentationen) entworfen und zusammengestellt wurden, auf der Projektionsfläche (Leinwand) zu erreichen. Dies erfordert spezielle Verfahrensschritte, Farbmessausrüstungen und Softwarelösungen, welche im folgenden anhand der Zeichnung näher erläutert werden. In der Zeichnung zeigen:
- Fig. 1: eine schematische Gesamtansicht eines bevorzugten Ausführungsbeispiels des erfindungsgemässen Systems,
- Fig. 2: eine von einer Visiervorrichtung auf der Projektionsfläche erzeugte Positi- onierungsmarke,
- Fig. 3: eine schematische Darstellung der Erstellung eines Geräteprofils,
- Fig. 4: eine schematische Darstellung der wesentlichsten Aspekte eines Color Management Systems,
- Fig. 5: eine schematische Darstellung eines bevorzugten Ausführungsbeispiels des erfindungsgemässen Lichtmessgeräts,

- Fig. 6: eine Variante des erfindungsgemässen Systems,
- Fig. 7: eine weitere Variante des Systems und
- Fig. 8: eine schematische Ansicht eines weiteren Ausführungsbeispiels des erfin- dungsgemässen Systems.

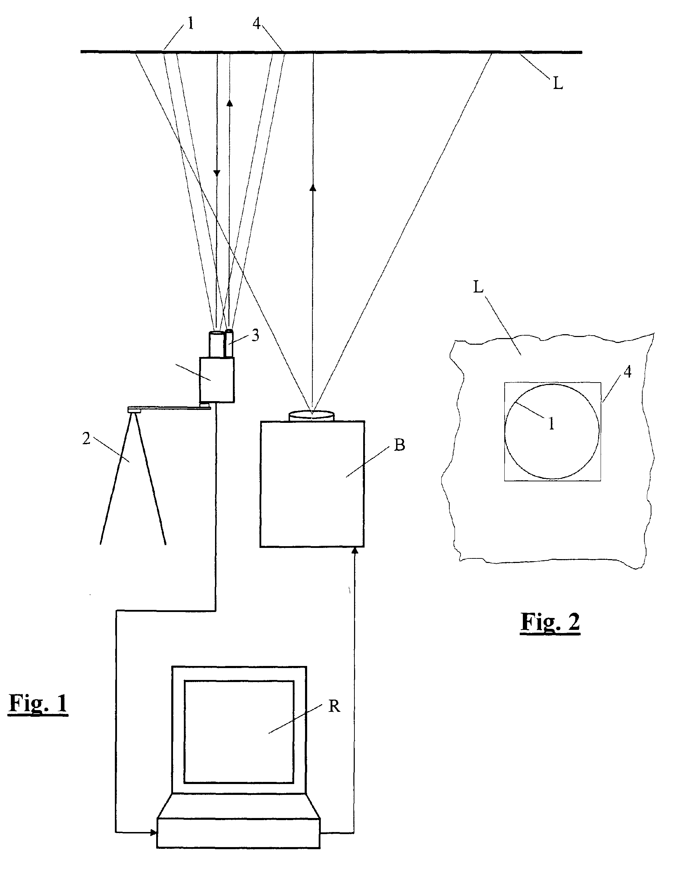

Das erfindungsgemässe System umfasst gemäss Fig. 1 einen Rechner R, an den eine im folgenden kurz als Beamer bezeichnete Projektionseinrichtung B in der üblichen weise (über die Videokarte bzw. eine der Videokarten des Rechners) angeschlossen ist. Im Rechner R sind digitale Bilddaten gespeichert, welche die visuell darzustellende Bildinformation in einem Farbraum (normalerweise RGB) repräsentieren. Bei der Bildinformation handelt es sich typischerweise um ein Bild-Dokument oder eine Präsentation, welche auf dem Rechner selbst oder auf einem anderen Rechner mittels eines der bekannten Anwendungsprogramme (z.B. Microsoft PowerPoint) erzeugt worden ist. Der Rechner R führt die Bilddaten über seine Video-Karte in Form eines Videodatenstroms dem Beamer B zu. Dieser wandelt die Bilddaten in an sich bekannter Weise in entsprechende optische Signale um und projiziert diese auf eine geeignete Projektionsfläche, beispielsweise eine Leinwand L, um so die zugrundeliegende Bildinformation visuell darzustellen. Soweit entspricht das System voll und ganz dem Stand der Technik, so dass der Fachmann diesbezüglich keiner näheren Erläuterung bedarf.

An den Rechner R ist ferner ein als Tristimulus-Farbmessgerät oder vorzugsweise als Spektralfotometer ausgebildetes Lichtmessgerät M angeschlossen. Das Lichtmessgerät kann in an sich bekannter Weise von einer auf dem Rechner R laufenden, noch zu erläuternden Softwareanwendung gesteuert werden und Messdaten an diese Softwareanwendung abgeben. Das Lichtmessgerät M wird beim Einsatz des Systems im Zuschauerraum aufgestellt und emfängt das innerhalb eines Messbereichs (Messflecks) 1 von der Projektionsfläche L remittierte (reflektierte und gestreute) Licht. Wie weiter unten noch im Detail erläutert wird, ist das Lichtmessgerät M dazu erfindungsgemäss speziell ausgebildet. Das Lichtmessgerät M kann beispielsweise auf einem Sockel oder Stativ 2 montiert oder alternativ auch direkt auf dem Beamer positioniert oder in diesen integriert sein.

In dem in Figur 1 gezeigten Ausführungsbeispiel mit körperlich vom Beamer B separatem Lichtmessgerät M ist dieses gemäss einer besonders vorteilhaften Ausgestaltung mit einer Visiervorrichtung 3 zur Ausrichtung gegenüber der Leinwand L ausgestattet. Die Visiervorrichtung 3 ist als an sich bekannter Laserzeiger (Laser Pointer) ausgebildet, welcher eine Positionierungsmarke 4 auf die Leinwand L projiziert. Vorzugsweise enthält der Laserzeiger in seinem Strahlengang ein diffraktives Element, welches das sonst übliche Punktbild der Laserdiode auf der Leinwand L in ein zweidimensionales Muster, z.B. ein Kreuz, einen Kreis oder ein Quadrat aufweitet. Der Laserzeiger 3 und das Lichtmessgerät M sind gegenseitig so angeordnet und das optische System des Laserzeigers ist so ausgelegt, dass die Grösse und Position der zweidimensionalen Positionierungsmarke 4 auf der Leinwand L im wesentlichen mit dem vom Lichtmessgerät abgetasteten Messbereich 1 auf der Leinwand L übereinstimmt. Die Figur 2 verdeutlicht dies. Der Anwender kann so das Lichtmessgerät bequem ausrichten und hat so eine sehr einfache Kontrolle, ob der Messbereich des Lichtmessgeräts M voll auf der Leinwand und innerhalb des vom Beamer ausgeleuchteten Bereichs derselben genau an der gewünschten Position liegt. Vorzugsweise sind die Divergenzwinkel der Messoptik des Lichtmessgeräts und der Optik des Laserzeigers gleich gross, so dass die Übereinstimmung von Messbereich und Positionierungsmarke unabhängig von der Messdistanz bleibt. Die Verwendung eines Laserzeigers als Visiervorrichtung bietet gegenüber klassischen Auslegungen basierend auf einem optischen Zielfernrohr grundlegende Vorteile. Die Visiervorrichtung kann kostengünstiger und kompakter hergestellt werden und ist vorteilhaft in der Bedienung. Ausserdem muss sich der Anwender nicht direkt neben dem Lichtmessgerät befinden.

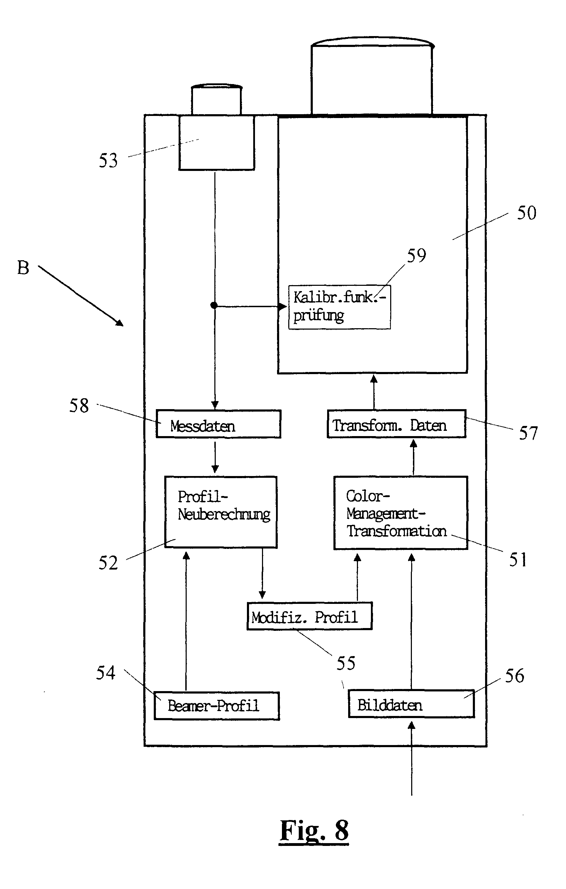

Das Lichtmessgerät M kann in einer in Figur 7 dargestellten alternativen Ausführungsform auch in den Beamer integriert, d.h. in diesen ein- oder an diesen angebaut sein. In diesem Fall ist die Visiervorrichtung natürlich nicht erforderlich.

Mittels des Lichtmessgeräts M und der im Rechner R laufenden Softwareanwendung kann gemäss einem Hauptaspekt der Erfindung ein Ausgabeprofil erzeugt werden, welches die Transfercharakteristik des Beamers und des gesamten Lichtwegs bis hin zum Auge des Beobachters beschreibt. Dieses Ausgabeprofil kann dann für das Color Management verwendet werden.

Das Color Management und vor allem die Farbmesstechnik für Beamer ist aufwendiger im Vergleich zu Monitoren, welche als Ausgabemedium ebenfalls mit RGB Signalen angesteuert werden. Die Ursache dafür liegt in der Tatsache, dass der Farbeindruck beim Beamer nicht nur vom Gerät selbst, sondern auch von der Reflexions- und Streucharakteristik der Projektionsfläche (z.B. Leinwand), der spektralen Verteilung und der Helligkeit des Umgebungslichts im Raum sowie von wahrnehmungs- und empfindungsbestimmenden Faktoren des menschlichen Beobachters, z. B. dem Adaptationsgrad des Auges abhängt. Diese Faktoren müssen messtechnisch erfasst und im CMS berücksichtigt werden können. Diese Faktoren sind auch verantwortlich dafür, dass eine während der Herstellung des Beamers durchgeführte Grundkalibration und Profilierung keine optimale Farbreproduktion ermöglicht. Idealerweise muss die Kalibration und Profilierung beim Anwender in regelmässigen Abständen durchgeführt und wiederholt werden, so dass auch Veränderungen und Alterungsprozesse im optischen System des Beamers kompensiert werden können.

Beamer sind wie Monitore Selbstleuchter und müssen mit Farbmessgeräten für Emissionsmessungen vermessen werden. Kommerziell erhältliche Farbmessgeräte für Emissionsmessungen in Color Management Anwendungen sind speziell für die Messung an Monitoren ausgelegt. Sie werden mittels Saugnäpfen oder anderen Befestigungsmechanismen direkt auf dem Bildschirm oder unmittelbar davor plaziert. Diese Geometrie wird benötigt, um Reflexe des Umgebungslichts an der Bildschirmoberfläche zu eliminieren. Beispiele solcher Farbmessgeräte sind das Spektralphotometer "Spectrolino" der Anmelderin oder das Colorimeter "DTP 92 CIE"der Firma X-Rite.

Da bei der Beamermessung vorzugsweise auch die Projektionsfläche bzw. Leinwand miteinbezogen wird, muss die Farbmessung auf Distanz ausgeführt werden können. Dies ist erforderlich, um Abschattungen im vom Beamer projizierten Licht zu vermeiden. Ausserdem muss bei der Beamermessung das von der Leinwand reflektierte und gestreute Umgebungslicht mitgemessen werden, da es vom Beobachter im Raum wahrgenommen wird und die Farbempfindung beeinflusst. Typische Monitor-Farbmessgeräte sind deshalb nicht anwendbar.

In der bevorzugten Ausführungsform der vorliegenden Erfindung wird das vom Beamer projizierte Licht nach der Reflexion und Streuung an der Leinwand bzw. allgemein der Projektionsfläche gemessen. Die Einflüsse der Leinwand und des Umgebungslichts im Raum sind in den Messwerten und deshalb in den daraus berechenbaren Kalibrations- und Profildaten enthalten. Dazu muss das Lichtmessgerät im Raum plaziert und gegenüber der Leinwand ausgerichtet werden können. Idealerweise sollte das Gerät in einem dem Blickwinkel der Beobachter entsprechendem Winkel gegenüber der Leinwand aufgestellt werden. Der Messwinkel gegenüber der Senkrechten zur Ebene der Leinwand sollte klein sein (< 20°), da sich bei schlechten Leinwänden oder Projektionsflächen die spektrale Verteilung des reflektierten Lichts für grosse Messwinkel verändern kann.

Das optische System des Lichtmessgeräts ist als Leuchtdichtemesskopf gestaltet. Ein solches System misst die abgestrahlte Intensität in einem kleinen Raumwinkelbereich, was die Voraussetzung für eine Messung auf Distanz ist. Ausserdem entspricht die Helligkeitswahrnehmung des menschlichen Auges auch der Leuchtdichte. Bei Verwendung eines Spektralfotometers können die spektralen Messwerte über die Kalibration des Spektralfotometers in Tristimulus-Farbwerte XYZ gemäss den Definitionen der CIE und in absolute Leuchtdichtewerte umgerechnet werden. Die absolute Leuchtdichtekalibration ist sinnvoll, um während der Kalibration die Lichtpegel des Beamers und des Umgebungslichts im Raum auf bestimmte vordefinierte Werte einstellen zu können, d.h. das Lichtmessgerät auch für die Kalibrierung des Beamers verwenden zu können.

Das optische System des Lichtmessgeräts M muss für variable Messdistanzen einen begrenzten Messbereich (Messfleck) 1 auf der Leinwand L sehen. In der einfachsten Ausführung fokusiert eine Linse oder ein Linsensystem das empfangene Licht auf den Lichteintrittsspalt der Detektoreinheit des Lichtmessgeräts. Die Linsenparameter sind so gewählt, dass der Erfassungswinkel des optischen Systems klein wird (<5°). Das Lichtmessgerät M kann in an sich bekannter Weise z.B. als klassisches Colorimeter (Dreibereichsmessgerät, Tristimulus-Farbmessgerät) oder als Spektralfotometer ausgebildet sein.

Ein Colorimeter enthält drei Messkanäle mit einer Filtercharakteristik, die möglichst den genormten Normalbeobachtern nachgebildet wird. Die Messwerte des Colorimeters entsprechen deshalb direkt den Tristimulus-Farbwerten XYZ. Die Detektoreinheit eines solchen Colorimeters kann aus drei Photodioden mit vorgesetztem Filter oder mit einer Photodiode und einem Filterrad realisiert werden. Eine gleichmässige Ausleuchtung kann durch den Einsatz einer Feldlinse und/oder einer Streuscheibe vor der Detektoreinheit erreicht werden.

Bei einem Spektralfotometer wird das Messlicht direkt oder mittels eines Lichtleiters auf den Eintrittsspalt eines dispergierenden Elements in Form eines Beugungsgitters oder eines Prismas gebracht. Das Gitter- oder Prismenspektrometer ist vorteilhaft als Diodenzeilenspektrometer für den sichtbaren Spektralbereich ausgebildet. Eine alternative Bauform wird durch den Einsatz von vielen schmalbandigen Interferenzfiltern, die den ganzen sichtbaren Spektralbereich abtasten, erreicht. Die Interferenzfilter können auf einem Filterrad mit einer Photodiode oder in mehreren entsprechenden Messkanälen mit je einer Photodiode und Filter angeordnet sein.

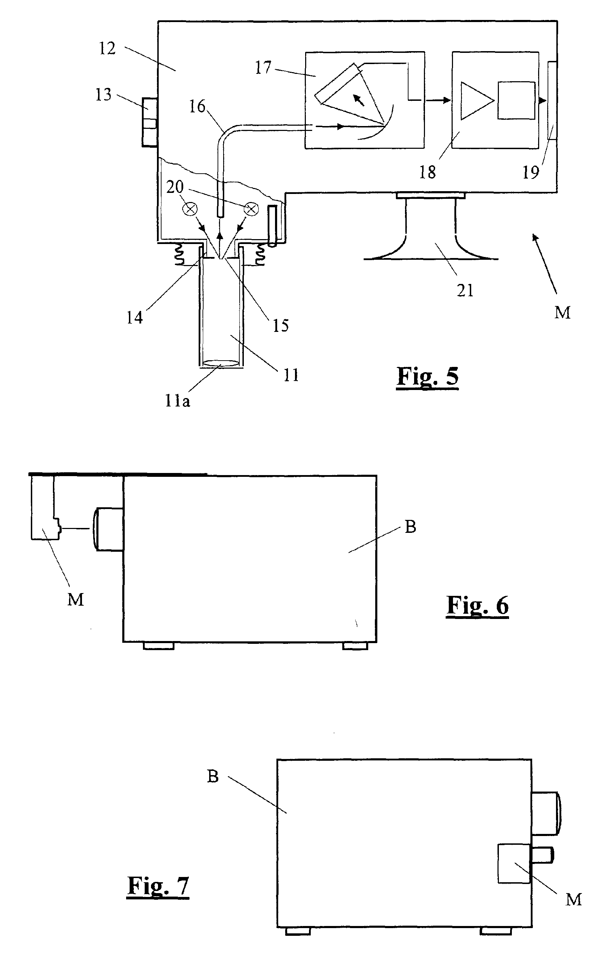

Die Figur 5 zeigt ein bevorzugtes Ausführungsbeispiel eines Lichtmessgeräts M, welches den oben beschriebenen Anforderungen genügt. Es ist als Spektralfotometer ausgebildet und im Prinzip wie das bekannte Spektralfotometer "Spectrolino" der Firma GretagMacbeth aufgebaut. Es unterscheidet sich von diesem bekannten Spektralfotometer im wesentlichen nur durch einen Linsenvorsatz (Tubus) 11 und den Laserzeiger 3 sowie eine am Gehäuse 12 angeordnete mechanische Schnittstelle 13, über welche das Gerät im praktischen Einsatz auf einem Sockel oder dem schon erwähnten Stativ 2 montiert werden kann. Der Linsenvorsatz 11 ist auf den Messtubus 14 des Lichtmessgeräts aufgesteckt und kann abgenommen werden, so dass das Gerät auch für die klassischen Verwendungszwecke eingesetzt werden kann. Die im Linsenvorsatz 11 enthaltene Linse 11a (oder ein mehrlinsiges Objektiv) bildet den Messbereich 1 der Projektionsfläche L auf die Messblende 15 des Geräts ab (bzw. umgekehrt). Das durch die Messblende 15 eintretende Messlicht wird in einen Lichtleiter 16 eingekoppelt und von diesem einem Diodenzeilen-Spektrometer 17 zugeführt. Die entsprechenden elektrischen Signale des Spektrometers werden in einer Signalverarbeitungsstufe 18 verstärkt und digitalisiert und dann an einer Kommunikationsschnittstelle 19 zur Verfügung gestellt. Für Remissionsmessungen an nicht selbstleuchtenden Messobjekten ist ferner eine Beleuchtungseinrichtung 20 mit der üblichen 45°-Geometrie vorgesehen. Der Laserzeiger 3 ist beispielsweise seitlich neben dem Messtubus 14 angeordnet. Bei abgenommenem Linsenvorsatz 11 und mit Ausnahme des Laserzeigers 3 entspricht das Lichtmessgerät, wie schon gesagt, genau dem bekannten Spektralfotometer "Spectrolino", so dass sich eine weitere Erläuterung erübrigt. Das Gerät ist im übrigen noch mit einem Saugfuss 21 ausgestattet, mittels welchem es für Messungen an einem Monitor an dessen Bildschirm befestigt werden kann. Ein den Messtubus 14 umschliessender Balg 22 hält dabei Umgebungslicht fern.

Color Management benötigt immer die Kalibration und Profilierung von mehreren Ein- und Ausgabegeräten. Mit dem eben beschriebenen bevorzugten Ausführungsbeispiel des erfindungsgemässen Lichtmessgeräts können Messungen in verschiedenen Messgeometrien (Remission und Emission) und an verschiedenen Ein- und Ausgabegeräten (Monitor, Beamer und Druckvorlagen) ausgeführt werden.

Der Einsatz eines einzigen Farbmessgeräts für den gesamten Color Management Zyklus ermöglicht geringe Anschaffungskosten sowie auch höchste Genauigkeit für die Farbreproduktion, da Geräteprofile basierend auf identischer Messtechnik miteinander verknüpft werden.

Für diese universelle Einsetzbarkeit des Lichtmessgeräts ist im Messkopf des Geräts zusätzlich die schon erwähnte Beleuchtungsoptik 20 vorgesehen. Die Beleuchtungs- und Sammeloptiken sind gemäss der üblichen normierten 45°/0° Geometrie ausgelegt. In dieser Anordnung wird bei Remissionsmessungen die Messprobe unter 45° beleuchtet und das von der Probe reflektierte und diffus gestreute Licht unter 0° bewertet. Die Blende 15 in der Messfeldebene ermöglicht eine exakte Definition des Messfeldes für die Remissionsmessung und eliminiert Fremdlicht. Mit der Blende 15 kann der Messkopf auch für die Emissionsmessung auf Monitoren positioniert werden. Die Sammeloptik unter 0° muss mit einem möglichst kleinen Erfassungswinkel realisiert werden, damit der Messkopf für die Emissionsmessung am Beamer geeignet ist. Dies kann z. B., wie schon vorher beschrieben, mit einer Linse erreicht werden, in deren Brennpunkt die Detektoreinheit angeordnet ist. In dieser Anordnung vergrössert sich der Messfleckdurchmesser auf der Leinwand mit zunehmender Entfernung. Solange der Messfleck der Sammeloptik nicht von dem Messfeld auf der Leinwand begrenzt wird, werden konstante Leuchtdichtewerte und Farbmesswerte erreicht. Die Messgenauigkeit hängt von der Uniformität der Lichtverteilung auf der Leinwand ab._In der bevorzugten Ausführungsform ist der eine zusätzliche Abbildungsoptik 11a enthaltende Linsentubus 11 auf die Feldblende 15 bzw. den Messtubus 14 des Messkopfes aufgesetzt. Mit dieser Anordnung kann ein scharf begrenzter Messfleck über grosse Distanz erreicht werden.

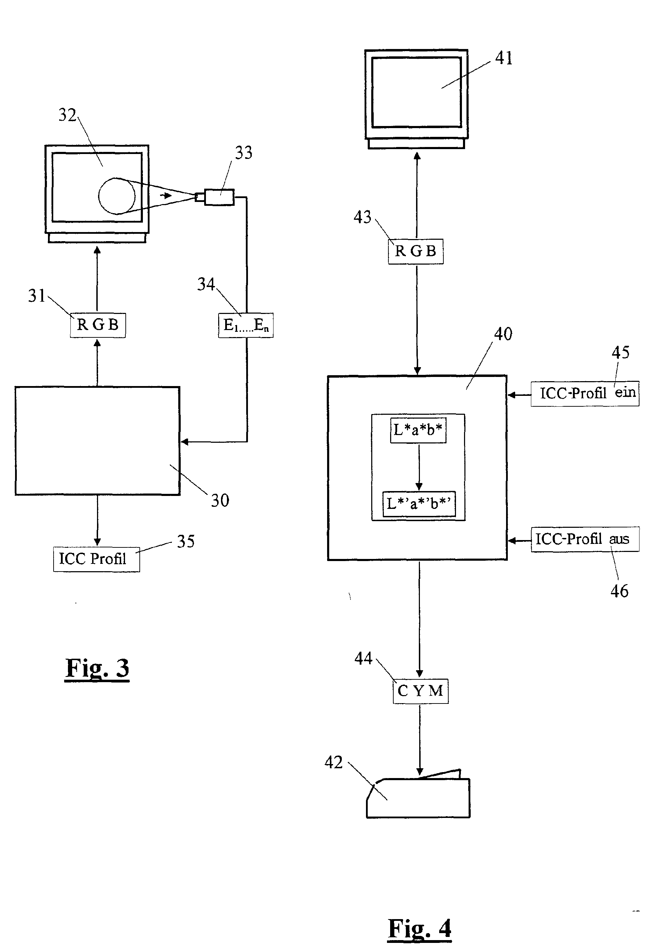

Die Erstellung eines Geräteprofils ist an sich bekannt und wird im folgenden in Verbindung mit der Figur 3 anhand des Beispiels für einen Monitor prinzipiell erläutert.

Im Rechner ist eine geeignete Profilerstellungssoftware 30, beispielsweise etwa das schon erwähnte Programmpaket "Profile Maker" der Firma Logo, installiert. Dieses Programm erzeugt ein sequentielles Testchart (eine Abfolge von Farbtönen), welche durch entsprechende RGB-Werte 31 repräsentiert werden. Die RGB-Werte werden dem zu profilierenden Monitor 32 über die Videokarte des Rechners zugeführt, so dass auf dem Monitor eine entsprechende Abfolge von verschiedenen Farbtönen dargestellt wird. Die einzelnen Farbtöne werden von einem am Monitor angebrachten Spektralfotometer 33 ausgemessen und in entsprechende Sätze von spektralen Messdaten 34 umgewandelt. Diese werden dann in die Profilerstellungssoftware 30 eingelesen. Aus den spektralen Messdaten 34 werden im Programm 30 entsprechende Farbvektoren (Farborte) in einem geräteunabhängigen Farbraum, beispielsweise CIELab berechnet, welche den tatsächlichen Farbort der vom Monitor erzeugten Farbtöne angeben. Aus diesen tatsächlichen Farborten und den zugrundeliegenden RGB-Werten wird dann in an sich bekannter, genormter Weise das Profil des Monitors berechnet und als Profil-Datei 35 genormten Formats im Rechner abgespeichert.

Die Erstellung des Ausgabeprofils für den Beamer kann in genau der gleichen Weise erfolgen, wobei an die Stelle des Monitors der Beamer tritt. Wenn wie in dem in Figur 1 gezeigten bevorzugten Ausführungsbeispiel das von der Leinwand remittierte Licht zusammen mit dem Umgebungslicht gemessen wird, beschreibt das dabei erzeugte Profil die gesamte Transfercharakteristik des Systems ausgehend von dem dem Beamer zugeführten Videodatenstrom über den Beamer und die Leinwand bis hin zum Auge des Beobachters. Falls das Lichtmessgerät M, wie in Figur 6 gezeigt, in einer alternativen Ausführungsform unmittelbar vor der Projektionsoptik des Beamers positioniert wird, erhält man ein reines Geräteprofil, das nur die Transfercharakteristik des Beamers selbst beschreibt, die Eigenschaften der Leinwand und Umgebungseinflüsse aber nicht mit berücksichtigt.

Das genannte Software-Paket "Profile Maker" schliesst auch eine Kalibrierungsfunktionalität ein, die im Prinzip ähnlich wie die Profilerstellung arbeitet. Es werden diverse Kalibrierungsmuster (z.B. ein Weissfeld, ein Schwarzfeld etc.) erzeugt und auf dem zu kalibrierenden Gerät dargestellt. Die Kalibrierungsmuster werden ausgemessen und die Messwerte der Software wieder zugeführt. Gleichzeitig werden manuell oder über eine entsprechende Schnittstelle ggf. auch automatisch, sofern das Gerät dazu ausgebildet ist, die Kalibrierungsorgane bzw. -einstellungen des Geräts solange verändert, bis die gewünschte Kalibrierung erreicht ist. Selbstverständlich kann die Kalibrierung der Geräte auch ohne dieses Software-Paket erfolgen. Ein Farbmessgerät ist dazu aber in aller Regel zumindest für höhere Qualitätsansprüche immer erforderlich.

Color Management benötigt, wie schon erwähnt, immer die Kalibration und Profilierung aller beteiligten Ein- und Ausgabegeräte. In Figur 4 ist die prinzipielle Funktionsweise des Color Management schematisch am Beispiel einer Monitor-Drucker-Kombination dargestellt. Der Monitor 41 ist hier als Eingabegerät zu verstehen, der Farbdrucker 42 ist das Ausgabegerät. Im einem Rechner ist ein Color Management Software-Modul 40 installiert, beispielsweise etwa das zum Betriebssystem Microsoft Windows 2000 gehörende CMM-Modul "ICM", welches von allen Color Management unterstützenden Anwendungsprogrammen aufgerufen werden kann. Mittels einer geeigneten Anwendungssoftware wird auf dem Monitor 41 des Rechners visuell eine gewünschte Farbe dargestellt, welcher ein bestimmtes RGB-Werte-Tripel 43 entspricht. Würde dieses RGB-Werte-Tripel 43 ohne weitere Manipulation direkt in ein für die Ansteuerung des Druckers geeignetes CYM-Werte-Tripel 44 (oder ein entsprechendes CMYK-Werte-Quadrupel) umgerechnet, so würde die auf dem Drucker 42 ausgedruckte Farbe in aller Regel erheblich von der am Monitor 41 dargestellten Farbe abweichen. Dies ist bekanntlich dadurch bedingt, dass die darstellbaren Farbräume und die Transfercharakteristiken eines Monitors und eines Druckers grundsätzlich unterschiedlich sind.

Für die farbtreue Reproduktion muss der Farbraum des Eingabegeräts (Monitor 41) unter Beachtung gewisser Kriterien und Strategien in den Farbraum des Ausgabegeräts (Drucker 42) transformiert werden. Diese Transformation ist die Aufgabe des Color Management Moduls 40, das dazu die ICC-Profile 45 und 46 der beiden beteiligten Geräte als Parameter benötigt. Das CMM 40 rechnet unter Beiziehung des (hier zum Monitor 41 gehörenden) Eingabe-Profils 45 die Farbwerte des eingangsseitigen geräteabhängigen Farbraums (hier RGB) in entsprechende Farbwerte eines geräteunabhängigen Farbraums (hier CIELab) um, passt diese Farbwerte anhand des (hier zum Drucker 42 gehörenden) Ausgabeprofils 46 an den Farbraum des Ausgabegeräts (hier des Druckers 42) an, wobei gegebenenfalls nicht erreichbare Farborte L*,a*,b* durch erreichbare Farborte L*',a*',b*' ersetzt werden (Gammut Matching), und rechnet schliesslich diese Farborte bzw. Ersatzfarborte des geräteunabhängigen Farbraums in den geräteabhängigen Farbraum (hier CYM) des Ausgabegeräts (Druckers 42) um.

Beim erfindungsgemässen Verfahren bzw. System erfolgen genau dieselben Schritte mit dem einzigen Unterschied, dass an die Stelle des Farbdruckers der Beamer B tritt und dass als Ausgabeprofil dasjenige des Beamers verwendet wird.

Wie schon im Zusammenhang mit Figur 6 erwähnt, kann in einer alternativen Ausführungsform des erfindungsgemässen Verfahrens bzw. Systems das Lichtmessgerät M bzw. dessen Messkopf auch direkt in den Strahlengang vor das Beamerobjektiv positioniert werden. In dieser Anordnung wird eine gerätespezifische Kalibration und Profilierung des Beamers selbst erstellt. Gerätespezifische Profile können auch während der Herstellung des Beamers erstellt und mit dem Gerät ausgeliefert werden. Der Einfluss der Leinwand und des Umgebungslichts ist dabei aber verständlicherweise nicht berücksichtigt und muss erst nachträglich im praktischen Einsatz des Beamers in die Profilierung einbezogen werden. Dies kann wiederum mittels der in Figur 1 gezeigten Messanordnung geschehen, wobei aber nur noch eine Hell- und eine Dunkelmessung erforderlich sind. Das gerätespezifische Beamerprofil kann dann mit den Daten der Hell- und Dunkelmessung an die aktuellen Verhältnisse im Präsentationsraum rechnerisch angepasst werden. Diese Anwendung ist von Vorteil, wenn der Beamer mobil eingesetzt wird, da die Hell- und Dunkelmessung sehr viel schneller ausgeführt sind als das Einmessen eines kompletten Geräteprofils.

Gemäss einer weiteren, im Zusammenhang mit Figur 7 schon kurz angesprochenen Ausführungsform kann das Lichtmessgerät M auch in das Beamergehäuse integriert sein. Die Achse der Messoptik des Messkopfs des Lichtmessgeräts M kann dann parallel zur Achse der Projektionsoptik des Beamers angeordnet werden, so dass eine Positionierung des Lichtmessgeräts entfällt. Ein weiterer Vorteil der integrierten Anordnung ist, dass das Lichtmessgerät auch dazu verwendet werden kann, automatisch in regelmässigen Abständen den Kalibrationszustand des Beamers zu überprüfen und eine Neukalibrierung und -profilierung oder zum Beispiel auch einen Lampenwechsel zu veranlassen.

In Figur 8 ist ein weiteres Ausführungsbeispiel des erfindungsgemässen Systems dargestellt, bei welchem alle erforderlichen Komponenten im Beamer B selbst untergebracht sind. Moderne Beamer sind rechnergesteuert, so dass die Integration von zusätzlichen Funktionalitäten in Form von Software-Moduln technisch kein wesentliches Problem darstellt.

Der Beamer B enthält hier neben dem üblichen, die zugeführten Videosignale in Lichtsignale umsetzenden Hauptfunktionsblock 50 noch ein Color Management Modul 51 und ein Profilerzeugungsmodul 52 sowie ein eingebautes Lichtmessgerät, vorzugsweise ein Spektralfotometer 53 im wesentlichen der weiter vorne beschriebenen Art. Im Beamer B (bzw. dessen Rechner) sind ferner ein z.B. schon bei der Herstellung desselben erzeugtes Beamer-Profil 54 sowie ein im praktischen Einsatz erzeugtes Ausgabe-Profil 55 gespeichert. Das Color Management Modul 51 transformiert die dem Beamer vom steuernden externen Rechner zugeführten Bilddaten 56 anhand des AusgabeProfils 55 in der weiter vorne beschriebenen Art und Weise in korrigierte Bilddaten 57, welche dann als Eingangssignale dem Hauptfunktionsblock 50 zugeführt und in entsprechende Lichtsignale umgewandelt werden.

Das Profilerzeugungsmodul 52 erstellt aufgrund der vom Spektralfotometer 53 gelieferten Messdaten 58 in der weiter vorne beschriebenen Weise das Ausgabe-Profil 55. Alternativ kann es das Ausgabeprofil 55 auch aus dem abgespeicherten Beamer-Profil 54 in Verbindung mit vom Spektralfotometer 53 erzeugten Messdaten berechnen, die von einigen wenigen Messungen, insbesondere einer Hell- und einer Dunkelmessung stammen. Auf diese Weise können wiederum die Eigenschaften der Projektionsfläche und die Umgebungslichtverhältnisse in die Profilierung bzw. das Color Management mit einbezogen werden. Die absoluten Farbwerte XYZ der Dunkelmessung können zu den absoluten (geräteunabhängigen) Farbwerten XYZ des Beamerprofils dazuaddiert werden. Mit den absoluten Farbwerten der Hellmessung wird eine chromatische Adaptation oder Verschiebung (Shift) des Weisspunkts der absoluten Farbwerte XYZ des Beamerprofils durchgeführt. Die chromatische Adaptation der Farbwerte XYZ kann gemäss den Formeln von von Kries, wie z.B. im Buch Color Appearance Models von M. Fairchild im Kapitel 9 beschrieben, mit einer Matrixmultiplikation durchgeführt werden. Das Profilerzeugungsmodul 52 kann analog dem schon genannten Software-Paket "Profile Maker" aufgebaut sein und bedarf deshalb keiner weiteren Erläuterung.

Wie schon gesagt, kann das Lichtmessgerät bzw. Spektralfotometer 53 auch für Kalibrierungszwecke eingesetzt werden. Vorzugsweise enthält der Beamer eine automatische Kalibrierungseinrichtung 59, die mit dem eingebauten Spektralfotometer 53 zusammenarbeitet und dessen Messdaten 58 als Eingangsdaten erhält. Die Messdaten können dabei auch zur Kontrolle des Kalibrierungszustands und auch des allgemeinen Funktionszustands des Beamers ausgewertet werden. Je nach Ergebnis dieser Auswertung kann automatisch eine Neukalibrierung, ggf. inkl. Neuprofilierung ausgelöst oder eine Anforderungsmeldung für erforderliche Wartungsarbeiten ausgegeben werden.

Für Color Management Anwendungen stellen die meisten der heute üblichen Betriebssysteme ein Color Management Module (CMM), zur Verfügung, welches die Verknüpfung von Eingabe- und Ausgabeprofilen ermöglicht. Bei Apple-Computern mit Mac Betriebssystem ist dies das System "ColorSync" und bei Windows-Rechnern das System "ICM", Das CMM kann von Anwendungsprogrammen für diese Aufgabe aufgerufen werden. Einzelne Präsentationsporgramme unterstützen Color Management noch nicht. Die Verknüpfung der Ein- und Ausgabeprofile, d.h. die Transformation der Farbwerte, muss dort deshalb anders gelöst werden. Eine anwendungsunabhängige Lösung erhält man, wenn man die Transformation direkt auf die Bildschirmdaten anwendet. Eine alternative Lösung stellt ein sog. Plug-in (einbindbares ZusatzProgramm-Modul) für eine spezifische Anwendungssoftware dar, welches die Farbtransformation ausführt.

## Patentansprüche

1. Verfahren zur visuellen Darstellung einer in elektronischer Form in einem Rechner vorliegenden Bildinformation auf einer Projektionsfläche, wobei im Rechner (R) gespeicherte, die Bildinformation in einem Farbraum repräsentierende Bilddaten in Form eines Videodatenstroms einer elektronischen Projektionseinrichtung (B) zugeführt werden, welche daraus entsprechende optische Signale erzeugt und diese auf die Projektionsfläche (L) projiziert, **dadurch gekennzeichnet, dass** ein die Transfercharakteristik mindestens der Projektionseinrichtung (B) selbst beschreibendes Ausgabeprofil erzeugt wird und dass die Bilddaten anhand dieses Ausgabeprofils nach den Prinzipien des Color Managements in den gerätespezifischen Farbraum der Projektionseinrichtung transformiert werden.

2. Verfahren nach Anspruch 1, **dadurch gekennzeichnet, dass** ein Ausgabeprofil erzeugt und zur Transformation der Bilddaten verwendet wird, welches die gesamte Transfercharakteristik der Projektionseinrichtung und des Strahlengangs von der Projektionseinrichtung über die Projektionsfläche bis hin zum Auge des Beobachters beschreibt und dabei vorzugsweise die Reflexions- und Steucharakteristik der Projektionsfläche, die spektrale Verteilung und die Helligkeit des Umgebungslichts und wahrnehmungs- und empfindungsbestimmende Faktoren des menschlichen Auges mit einbezieht.

3. Verfahren nach einem der vorangehenden Ansprüche, **dadurch gekennzeichnet, dass** bei der Transformation der Bilddaten auch ein Eingabeprofil mit einbezogen wird, welches die Transfercharakteristik eines Geräts beschreibt, mit Hilfe von welchem die Bilddaten erzeugt wurden.

4. Verfahren nach einem der vorangehenden Ansprüche, **dadurch gekennzeichnet, dass** die Transformation der Bilddaten im Rechner (R) erfolgt.

5. Verfahren nach einem der vorangehenden Ansprüche, **dadurch gekennzeichnet, dass** die Transformation der Bilddaten in der Projektionseinrichtung (B) erfolgt.

6. Verfahren nach einem der vorangehenden Ansprüche, **dadurch gekennzeichnet, dass** ein gerätespezifisches Ausgabeprofil verwendet wird, welches nur die Transfercharakteristik der Projektionseinrichtung (B) selbst beschreibt, und dass dieses gerätespezifische Ausgabeprofil anhand von fotometrischen Hell- und Dunkelmessungen im Projektionsraum rechnerisch an die Lichtverhältnisse im Projektionsraum angepasst wird.

7. Verfahren nach einem der vorangehenden Ansprüche, **dadurch gekennzeichnet, dass** die Projektionseinrichtung (B) vor der Darstellung der Bildinformation und insbesondere vor der Erzeugung des Ausgabeprofils bezüglich ihrer Grundeinstellungen kalibriert wird.

8. Verfahren nach Anspruch 7, **dadurch gekennzeichnet, dass** die Kalibration anhand von Messdaten erfolgt, die durch fotometrische, insbesondere farbmetrische Ausmessung des von der Projektionseinrichtung (B) erzeugten und insbesondere des von der Projektionsfläche (L) remittierten Lichts gewonnen werden.

9. System zur visuellen Darstellung einer in elektronischer Form vorliegenden Bildinformation auf einer Projektionsfläche, mit einem Rechner (R), in welchem die Bildinformation in einem Farbraum repräsentierende Bilddaten gespeichert sind, und mit einer mit dem Rechner verbundenen elektronischen Projektionseinrichtung (B), welcher die Bilddaten vom Rechner in Form eines Videodatenstroms zugeführt werden und welche daraus entsprechende optische Signale erzeugt und diese auf die Projektionsfläche (L) projiziert, **dadurch gekennzeichnet, dass** im Rechner (R) und/oder in der Projektionseinrichtung (B) Bilddatenbearbeitungsmittel (40; 51) vorgesehen sind, welche die Bilddaten anhand eines Ausgabeprofils, das die Transfercharakteristik mindestens der Projektionseinrichtung beschreibt, nach den Prinzipien des Color Managements in den gerätespezifischen Farbraum der Projektionseinrichtung (B) transformieren.

10. System nach Anspruch 9, **dadurch gekennzeichnet, dass** Profilerstellungsmittel (M, 30; 53, 52) vorgesehen sind, mittels welcher das Ausgabeprofil selbsttätig erzeugt und abgespeichert werden kann.

11. System nach Anspruch 10, **dadurch gekennzeichnet, dass** die Profilerstellungsmittel ein mit dem Rechner (R) oder der Projektionseinrichtung (B) kommunizierfähiges, insbesondere als Farbmessgerät oder Spektralfotometer ausgebildetes Lichtmessgerät (M; 53) umfassen.

12. System nach Anspruch 11, **dadurch gekennzeichnet, dass** die Profilerstellungsmittel ein das Lichtmessgerät (M) und die Projektionseinrichtung (B) steuerndes Profilerstellungsprogramm (30) umfassen.

13. System nach einem der Ansprüche 11-12, **dadurch gekennzeichnet, dass** das Lichtmessgerät (M) dazu ausgebildet ist, das von der Projektionseinrichtung (B) erzeugte und von der Projektionsfläche (L) remittierte Licht zu messen.

14. System nach einem der Ansprüche 11-13, **dadurch gekennzeichnet, dass** das Lichtmessgerät (M) mit einer Visiervorrichtung (3) ausgestattet ist, mittels welcher es auf den gewünschten Messbereich (1) auf der Projektionsfläche (L) ausgerichtet werden kann.

15. System nach Anspruch 14, **dadurch gekennzeichnet, dass** die Visiervorrichtung als Laserzeiger (3) ausgebildet ist, welcher auf der Projektionsfläche (L) eine visuelle, vorzugsweise zweidimensionale Postionierungsmarke (4) erzeugt, welche die Lage und Grösse des vom Lichtmessgerät (M) erfassten Messbereichs (1) auf der Projektionsfläche (L) markiert.

16. System nach Anspruch 15, **dadurch gekennzeichnet, dass** die Divergenzwinkel der Auffangoptik des Lichtmessgeräts (M) und der Projektionsoptik des Laserzeigers (3) im wesentlichen gleich gross sind.

17. System nach einem der Ansprüche 11-13, **dadurch gekennzeichnet, dass** das Lichtmessgerät (M) in die Projektionseinrichtung (B) integriert ist.

18. System nach Anspruch 17, **dadurch gekennzeichnet, dass** in der Projektionseinrichtung (B) mit dem Lichtmessgerät (53) zusammenarbeitende Mittel (59) zur automatischen Kalibration und/oder Funktionskontrolle der Projektionseinrichtung vorgesehen sind.

19. Lichtmessgerät für ein System zur visuellen Darstellung einer in elektronischer Form vorliegenden Bildinformation auf einer Projektionsfläche, **dadurch gekennzeichnet, dass** es zur Erfassung des von einer Projektionsfläche (L) remittierten Lichts auf Distanz ausgebildet ist.

20. Lichtmessgerät nach Anspruch 19, **dadurch gekennzeichnet, dass** es zur Kommunikation mit einem Rechner (R) ausgebildet ist, so dass es vom Rechner steuerbar ist und Messdaten in den Rechner übertragen werden können.

21. Lichtmessgerät nach Anspruch 20, **dadurch gekennzeichnet, dass** es als kombiniertes Emissions/Remissionsmessgerät ausgebildet ist und eine Beleuchtungseinrichtung (20) für ein Messobjekt aufweist.

22. Lichtmessgerät nach einem der Ansprüche 19-21, **dadurch gekennzeichnet, dass** es mit einem abnehmbaren Linsenvorsatz (11) für Fernmessungen ausgestattet ist.

23. Lichtmessgerät nach einem der Ansprüche 19-22, **dadurch gekennzeichnet, dass** es als Spektralfotometer ausgebildet ist.

24. Lichtmessgerät nach einem der Ansprüche 19-23, **dadurch gekennzeichnet, dass** es mit einer mechanischen Schnittstelle (13) zur Befestigung an einem Tragorgan (2) ausgestattet ist.

25. Lichtmessgerät nach einem der Ansprüche 19-24, **dadurch gekennzeichnet, dass** es mit einem Montageorgan (21) zur Befestigung an einem Bildschirm ausgestattet ist.

26. Lichtmessgerät nach einem der Ansprüche 19-24, **dadurch gekennzeichnet, dass** es mit einer Visiervorrichtung (3) ausgestattet ist, mittels welcher es auf den gewünschten Messbereich (1) auf der Projektionsfläche (L) ausgerichtet werden kann.

27. Lichtmessgerät nach Anspruch 26, **dadurch gekennzeichnet, dass** die Visiervorrichtung als Laserzeiger (3) ausgebildet ist, welcher auf der Projektionsfläche (L) eine visuelle, vorzugsweise zweidimensionale Postionierungsmarke (4) erzeugt, welche die Lage und Grösse des vom Lichtmessgerät (M) erfassten Messbereichs (1) auf der Projektionsfläche (L) markiert.

28. Lichtmessgerät nach Anspruch 27, **dadurch gekennzeichnet, dass** die Divergenzwinkel der Auffangoptik des Lichtmessgeräts (M) und der Projektionsoptik des Laserzeigers (3) im wesentlichen gleich gross sind.

29. Projektionseinrichtung zur visuellen Darstellung einer in elektronischer Form in einem Rechner vorliegenden Bildinformation auf einer Projektionsfläche, welche Projektionseinrichtung aus ihr in Form eines Videodatenstroms vom Rechner (R) zugeführten, die Bildinformation in einem Farbraum repräsentierenden Bilddaten entsprechende optische Signale erzeugt und diese auf die Projektionsfläche (L) projiziert, **dadurch gekennzeichnet, dass** sie ein Color Management Modul (51) enthält, welches die ihr zugeführten Bilddaten anhand eines die Transfercharakteristik mindestens der Projektionseinrichtung (B) selbst beschreibenden Ausgabeprofil (55) in den gerätespezifischen Farbraum der Projektionseinrichtung transformiert.

30. Projektionseinrichtung nach Anspruch 29, **dadurch gekennzeichnet, dass** sie mit einem insbesondere als Spektralfotometer ausgebildeten Farbmessgerät (53) ausgestattet ist, welches das von der Projektionseinrichtung erzeugte und von der Projektionsfläche (L) remittierte Licht empfängt, und dass ein Profilerstellungsmodul (52) vorgesehen ist, welches anhand der vom Farbmessgerät (53) erzeugten Messdaten (58) das Ausgabeprofil (55) erzeugt und dem Color Management Modul (51) zur Verfügung stellt.

31. Projektionseinrichtung nach Anspruch 30, **dadurch gekennzeichnet, dass** das Profilerstellungsmodul (52) das Ausgabeprofil aus einem gespeicherten Geräteprofil (54) und den vom Farbmessgerät (53) erzeugten Messdaten (58) berechnet.

32. Projektionseinrichtung nach einem der Ansprüche 30-31, **dadurch gekennzeichnet, dass** mit dem Farbmessgerät (53) zusammenarbeitende Mittel (59) zur automatischen Kalibration der Projektionseinrichtung vorgesehen sind.
